(19) Europäisches Patentamt
European Patent Office
Office européen des brevets

(11) **EP 4 350 209 B1**

(12) **EUROPEAN PATENT SPECIFICATION**

(45) Date of publication and mention
of the grant of the patent:
**24.12.2025 Bulletin 2025/52**

(21) Application number: **22871052.1**

(22) Date of filing: **19.10.2022**

(51) International Patent Classification (IPC):
*F21S 41/25* *(2018.01)*    *G02B 5/18* *(2006.01)*
*G02B 3/04* *(2006.01)*    *G02B 3/08* *(2006.01)*

(52) Cooperative Patent Classification (CPC):
**G02B 3/08; G02B 3/04; G02B 5/1876;
G02B 5/1895**

(86) International application number:
**PCT/CN2022/126206**

(87) International publication number:
**WO 2024/036740 (22.02.2024 Gazette 2024/08)**

(54) **LENS AND VEHICLE LAMP HAVING SAME**

LINSE UND FAHRZEUGLAMPE DAMIT

LENTILLE ET PHARE DE VÉHICULE LA COMPRENANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.08.2022 CN 202210976219**

(43) Date of publication of application:
**10.04.2024 Bulletin 2024/15**

(73) Proprietor: **Changzhou Xingyu Automotive
Lighting
Systems Co., Ltd.
Changzhou, Jiangsu 213022 (CN)**

(72) Inventors:
• **ZHENG, Xianliang
Changzhou
Jiangsu 213022 (CN)**
• **ZHOU, Xiaoping
Changzhou
Jiangsu 213022 (CN)**

(74) Representative: **Lorenz Seidler Gossel Part. mbB
Widenmayerstr. 23
80538 München (DE)**

(56) References cited:
WO-A1-99/00623     CN-A- 108 626 686
CN-A- 110 286 473     CN-A- 111 561 682
CN-A- 111 561 682     CN-A- 115 046 171
CN-U- 201 561 349     JP-A- 2001 249 271
US-A- 5 581 405     US-A1- 2019 110 889

**Description**

## TECHNICAL FIELD

The present disclosure relates to the technical field of lenses, and in particular to a lens and a vehicular lamp including the lens.

## BACKGROUND

As a core component in high-beam and low-beam modules, a lens functions to bend light and project an image of a low-beam baffle to the front of a vehicle. The cost, weight and optical effect of the lens have attracted considerable attention in the high-beam and low-beam modules. The glass lens with low dispersion and excellent heat resistance is obstructed by hard processing, high cost and heavy weight. The plastic lens has advantages of light weight, low cost and easy processing. However, commonly-used plastic materials are intrinsically defective. For example, polymethyl methacrylate (PMMA) cannot meet the requirement for heat resistance of a vehicle headlamp despite low dispersion. Polycarbonate (PC) with desirable heat resistance has high dispersion to make a low-beam cutoff line blue or yellow.

Chinese Patent Application No. CN109716175 A provides a diffraction lens and a vehicular lamp using the same. Through a diffractive structure, the vehicular lens reduces a difference between an edge thickness and a center thickness, while ensuring performance of a low-beam cutoff line. In the scheme, many restrictions are imposed on the curvature, dioptre and wall thickness of the lens based on the cost and manufacturability. This reduces the design degree of freedom (DOF) and performance of the lens.

WO 99/00623 A discloses lens including an automotive lens body optically-transmissive to light emitted by the light source and reflected from the reflector. A diffractive grating is formed on the surface of the lens body to phase-shift the wavefront of the light passing through the lens body. The diffractive grating comprises a non-holographic microstructure having a pattern predetermined to cause the light passing through the lens body to generate the predetermined light pattern. CN 111 561 682 A relates to an automobile headlamp lens. Two surfaces of the lens body are respectively a refraction optical surface and a base surface. The base surface is provided with a diffraction optical surface. The diffraction optical surface comprises an outer diffraction region and an inner diffraction region which are concentrically arranged. JP 2001 249271 A relates to a refractive/diffractive hybrid lens in which a diffractive lens structure is formed on the lens surface of a refractive lens.

## SUMMARY

A technical problem to be solved by the present disclosure is to provide a lens and a vehicular lamp including the lens, to overcome shortages in the prior art. The lens has advantages of light weight, favorable manufacturability and desirable heat resistance, and can further ensure sharpness of the low-beam cutoff line and relieve aberration of the low-beam cutoff line.

The present disclosure solves the technical problem with the following technical solutions. A lens is fabricated in a layered injection moulding manner, and the lens can collimate diverging light from a focus of the lens to form parallel light; the lens is a hybrid refractive-diffractive lens, and includes a lens body, where a first refractive-diffractive surface and a second refractive-diffractive surface opposite to each other along an optical axis L are arranged on the lens body; the second refractive-diffractive surface is located at a side close to the focus, while the first refractive-diffractive surface is located at a side away from the focus; at least one of the first refractive-diffractive surface and the second refractive-diffractive surface is provided with a diffractive structure rotationally symmetric with respect to the optical axis L; and a dioptre of the diffractive structure accounts for 5-10% of a total dioptre of the lens body. An edge thickness H1 refers to a thickness of a position farthest from the optical axis L in a clear aperture of the lens body, a center thickness H2 refers to a distance between points of intersection of the first refractive-diffractive surface and the second refractive-diffractive surface with the optical axis L, and H1:H2=1:30 to 1:2.

Further, the first refractive-diffractive surface is a convex surface, and the second refractive-diffractive surface is a plane or a convex surface.

Further, the diffractive structure is provided on the first refractive-diffractive surface, and, in an example not according to the invention, a dioptre of the diffractive structure on the first refractive-diffractive surface accounts for 1-20% of the total dioptre of the lens body.

Further, the diffractive structure is provided on the second refractive-diffractive surface, and, in an example not according to the invention, a dioptre of the diffractive structure on the second refractive-diffractive surface accounts for 1-20% of the total dioptre of the lens body.

Further, the diffractive structures are respectively provided on the first refractive-diffractive surface and the second refractive-diffractive surface, and a sum of dioptres of the diffractive structures on the first refractive-diffractive surface and, in an example not according to the invention, the second refractive-diffractive surface accounts for 1-20% of the total dioptre of the lens body.

A vehicular lamp includes a low-beam light source, a low-beam reflector, a low-beam baffle, and a lens, where the lens has the above structure; the low-beam reflector covers an outer side of the low-beam light source; the lens is located at a light exiting side of the low-beam light source; and the low-beam baffle is located between the low-beam light source and the lens.

The present disclosure has the following beneficial effects. The lens has advantages of a simple structure, reasonable design, simple operation, desirable heat resistance and low dispersion. The lens can collimate diverging light of different wavelengths from the focus, ensure sharpness of the low-beam cutoff line, and prevent aberration and blurring of the cutoff line.

BRIEF DESCRIPTION OF THE DRAWINGS

The present disclosure will be further described below in conjunction with the accompanying drawings and embodiments.

FIG. 1 is a perspective view of a lens according to the present disclosure.
FIG. 2 is a schematic structural view of FIG. 1.
FIG. 3 is a curve of longitudinal aberration of a PC refraction lens.
FIG. 4 is a side view of a PC refraction lens.
FIG. 5 is a curve of longitudinal aberration of a diffraction lens.
FIG. 6 illustrates a comparison table on a proportion of a diffractive dioptre, a ratio of an edge thickness to a center thickness and longitudinal aberration of a PMMA lens.
FIG. 7 is a side view of a lens in performance test according to Embodiment 1.
FIG. 8 illustrates a parameter table of a lens according to Embodiment 1.
FIG. 9 is a curve of longitudinal aberration of a lens according to Embodiment 1.
FIG. 10 illustrates a parameter table of a lens according to Embodiment 2.
FIG. 11 is a curve of longitudinal aberration of a lens according to Embodiment 2.
FIG. 12 is a schematic structural view of a vehicular lamp according to the present disclosure.
FIG. 13 illustrates a comparison of a low-beam cutoff line using/not using a lens.

In the figures: 1. first refractive-diffractive surface, 2. second refractive-diffractive surface, 402. testing incident surface, 403. testing exit surface, 404. focus, 405. envelope surface, 406. diffractive structure, 702. using exit surface, 703. using incident surface, 705. low-beam baffle, 706. low-beam reflector, and 707. low-beam light source.

**DETAILED DESCRIPTION OF THE EMBODIMENTS**

The present disclosure is described in further detail below with reference to the accompanying drawings and preferable embodiments. These drawings are all simplified schematic diagrams, which merely illustrate the basic structure of the present disclosure in a schematic manner, and thus only show the parts associated with the present disclosure.

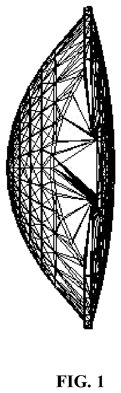

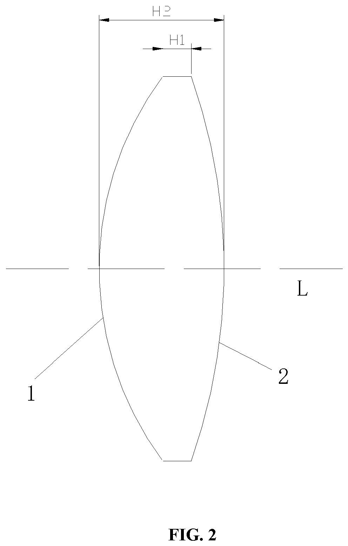

As shown in FIG. 1 and FIG. 2, a lens is provided. The lens is fabricated in a layered injection moulding manner. The lens includes a lens body. A first refractive-diffractive surface 1 and a second refractive-diffractive surface 2 opposite to each other along an optical axis are arranged on the lens body. The second refractive-diffractive surface 2 is located at a side close to a focus, while the first refractive-diffractive surface 1 is located at a side away from the focus. At least one of the first refractive-diffractive surface 1 and the second refractive-diffractive surface 2 is provided with a diffractive structure rotationally symmetric with respect to the optical axis. In an example not according to the invention, a dioptre of the diffractive structure accounts for 1-20% of a total dioptre of the lens body. The total dioptre of the lens body refers to a sum of a dioptre of a refractive structure and/or a dioptre of a diffractive structure in the first refractive-diffractive surface 1, and a dioptre of a refractive structure and/or a dioptre of a diffractive structure in the second refractive-diffractive surface 2.

The lens is made of optical grade plastic, including but not limited to PC, PMMA, optical resin developed by the Osaka Gas (OKP series), optical resin developed by the Mitsubishi Gas Chemical (EP series), optical resin developed by the Japan Synthetic Rubber (ARTON F/D series) or optical resin developed by the Zeon Corporation (Zeonex).

The first refractive-diffractive surface 1 is a convex surface, and the second refractive-diffractive surface 2 is a plane or a convex surface. The second refractive-diffractive surface 2 has a curvature radius of not less than 50 mm.

At least one of the first refractive-diffractive surface 1 and the second refractive-diffractive surface 2 is provided with the diffractive structure rotationally symmetric with respect to the optical axis, specifically:

The diffractive structure is provided on the first refractive-diffractive surface 1. In an example not according to the invention, a dioptre of the diffractive structure on the first refractive-diffractive surface 1 accounts for 1-20% of the total dioptre of the lens body.

Alternatively, the diffractive structure is provided on the second refractive-diffractive surface 2. In an example not according to the invention, a dioptre of the diffractive structure on the second refractive-diffractive surface 2 accounts for 1-20% of the total dioptre of the lens body.

Alternatively, the diffractive structures are respectively provided on the first refractive-diffractive surface 1 and the second refractive-diffractive surface 2, and in an example not according to the invention, a sum of dioptres of the diffractive structures on the first refractive-diffractive surface and the second refractive-diffractive surface accounts for 1-20% of the total dioptre of the lens body.

An edge thickness H1 refers to a thickness of a position farthest from the optical axis L in a clear aperture of the lens body. A center thickness H2 refers to a distance between points of intersection of the first refractive-diffractive surface and the second refractive-diffractive surface with the optical axis L. H1:H2=1:30 to 1:2.

For the sake of sharpness of a low-beam cutoff line, the lens for the vehicular lamp generally has the following characteristics: Light parallel to the optical axis L is bent (refracted) by the lens, and converged to the focus. Dioptre is termed as a light bending capacity of the lens. Usually, for the lens with known parameters, there are different focal lengths and dioptres for different wavelengths of light. Incident light having different wavelengths and parallel to the optical axis L is converged to different positions behind the lens to form longitudinal aberration. Concerning a low beam of a vehicular headlamp, the longitudinal aberration of the lens will cause dispersion and aberration of the low-beam cutoff line to affect a user experience. The following descriptions are made on longitudinal aberration of the conventional lens (refraction lens) and the conventional diffraction lens.

The refraction lens bends light with a difference between refractive indexes of different materials to light. Usually, the refractive index of the material is negatively correlated with the wavelength of the light. The longer the wavelength of the light, the smaller the refractive index of the material. Hence, the refraction lens contains positive dispersion for light bending, namely the longer the wavelength, the smaller an absolute value of a dioptre of the lens. Common visible wavelengths of 480 nm (blue light) and 644 nm (red light) and the common optical resin PC are used as an example. The PC has a refractive index $n_{480}$ of 1.5991 to light having the wavelength of 480 nm, and a refractive index $n_{644}$ of 1.5807 to light having the wavelength of 644 nm. Light enters the PC lens from air, in which parallel light is converged to a focus behind the lens through an incident surface and an exit surface of the lens. Assuming that two optical surfaces respectively have curvature radii of $r_1$ and $r_2$, relationships between focal lengths $f_1$ and $f_2$, and the curvature radii of the two surfaces are given by:

$$f_1 = \frac{1}{n-1} \cdot r_1 \ ;$$

and

$$f_2 = \frac{1}{n-1} \cdot (-r_2) \ .$$

Assuming the center thickness of the lens as H2, a dioptre $\Phi_r$ and a total focal length $f$ of the lens are a function of $f_1$, $f_2$ and H2:

$$\Phi_r = \frac{1}{f} = \frac{1}{f_1} + \frac{1}{f_2} - \frac{H2}{f_1 f_2} = \left( \frac{1}{r_1} - \frac{1}{r_2} \right) \cdot (n-1) + \frac{H2}{r_1 r_2} \cdot (n-1)^2$$

If absolute values of $r_1$ and $r_2$ are far greater than the center thickness d of the lens, the term $(n-1)^2$ can be ignored, namely:

$$\Phi_r = \frac{1}{f} \approx \left( \frac{1}{r_1} - \frac{1}{r_2} \right) \cdot (n-1)$$

As described above, due to different refractive indexes of the PC material to the light of different wavelengths, the refraction lens has different focal lengths and dioptres for the light of different wavelengths. As can be known from the comparison between the dioptre $\Phi_{r644}$ of the lens for the red light at 644 nm and the dioptre $\Phi_{r480}$ for the blue light at 480 nm:

$$\frac{\Phi_{r644} - \Phi_{r480}}{\Phi_{r644}} \approx \frac{n_{r644} - n_{r480}}{n_{r644} - 1} = -0.0317 \quad .$$

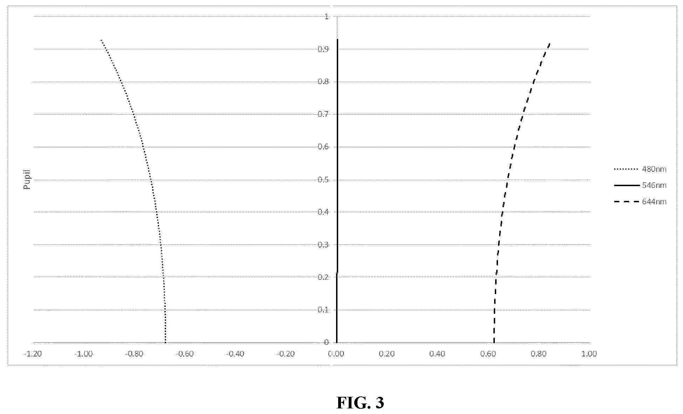

The dispersion is introduced by refraction and labeled as $\Delta\Phi_r$. As can be seen from the above equation, $\Delta\Phi_r$ is merely relevant to the material of the lens and the wavelength, but not to the surface type of the lens. FIG. 3 is a curve of longitudinal aberration of a PC refraction lens. The lens has a dioptre of 23.36 D. As can be seen from the curve, the lens has longitudinal aberration of about 1.3 mm to the red light and the blue light, namely a distance between a focus for the red light and a focus for the blue light on the optical axis L is 1.3 mm. The focus for the light at 480 nm is close to the lens, while the focus for the light at 644 nm is away from the lens. This aberration is called positive aberration.

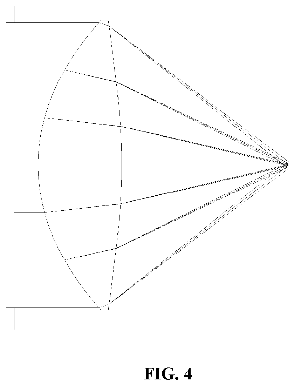

The refraction lens is further obstructed by a large difference between the center thickness and the edge thickness. Upon determination of the material (PC) and the refractive index (n = 1.4938@546 nm) of the lens, the surface of the lens must have a sufficient slope to refract parallel incident light to the focus of the lens. FIG. 4 is a side view of the PC refraction lens. The lens has the dioptre of 23.36 D, a diameter of 28 mm, an edge thickness of 1.5 mm, and a center thickness of 17.16 mm. The ratio of the edge thickness to the center thickness exceeds 1:10. In injection moulding, the large difference between the center thickness and the edge thickness causes shrinkage of the center of the lens, which is unfavorable to keep the surface type.

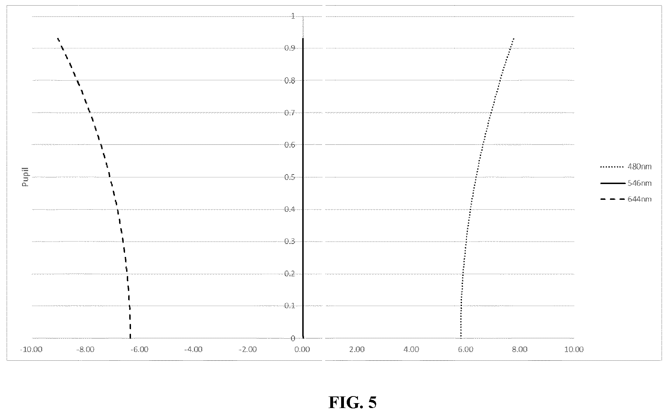

The diffraction lens is provided with non-equidistant annular step structures on one or two surfaces, so as to bend light with a principle of optical diffraction. Spacings and heights of the steps depend on incidence angles and exit angles of various points on the surface of the lens, a modulation amount of an optical path, as well as a refractive index and a harmonic diffractive coefficient of the lens. Through a diffractive structure, the bending angle of the light is directly proportional to the wavelength, namely the longer the wavelength of the light, the larger the dioptre of the lens. FIG. 5 is a curve of longitudinal aberration of the diffraction lens. The lens has a dioptre of 23.81 D. The longitudinal aberration for the red light and the blue light is about 12 mm, which is about 9 times the longitudinal aberration of the refraction lens. The direction of the longitudinal aberration is opposite to that of the refraction lens under same conditions. The focus for the light at 644 nm is close to the lens, while the focus for the light at 480 nm is away from the lens. This aberration is called negative aberration.

A hybrid refractive-diffractive optical technology makes use of dispersion characteristics of both the refraction lens and the diffraction lens. Specifically, a diffractive structure is provided on the conventional refractive optical surface, and a part of dioptres of the lens are realized by diffraction. Negative aberration in diffraction and positive aberration in refraction are counteracted to reduce overall dispersion of the lens.

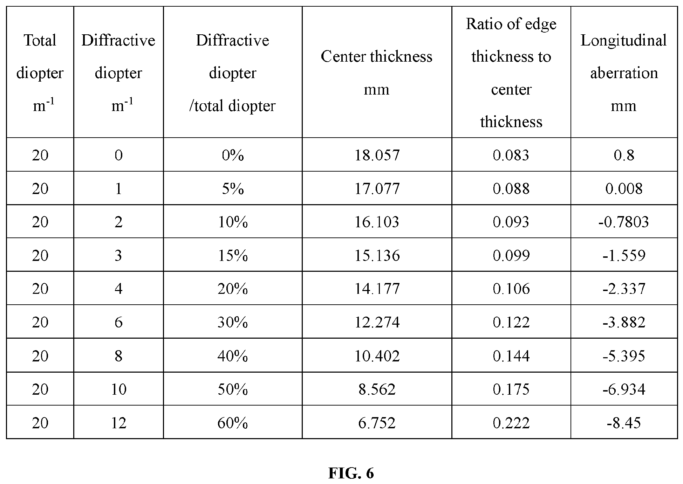

According to Chinese Patent Application CN 109716175 A (diffraction lens and vehicular lamp using same), the lens has the following characteristics: 30-60% of dioptres are realized by the diffraction, thereby reducing the difference between the edge thickness and the center thickness of the lens and the overall thickness of the lens, and yielding desirable primary injection moulding characteristic. Substantially, this scheme is a compromise of the design to the process. As described above, the diffraction has a dispersion coefficient far greater than that of the refraction. For the PC material with a high dispersion coefficient, the absolute value of the longitudinal diffractive dispersion is 9 times that of the longitudinal refractive dispersion. For the PMMA material with a small dispersion coefficient, the absolute value of the longitudinal diffractive dispersion is 19 times that of the longitudinal refractive dispersion. Excessive diffraction will cause serious dispersion to affect a color of the low-beam cutoff line. The PMMA material in Chinese Patent Application CN 109716175 A is used as an example. Assuming that the lens has a diameter of 56 mm, a total dioptre of 20 mm$^{-1}$, and an edge thickness of 1.5 mm, a comparison table on the proportion of the diffractive dioptre, the ratio of the edge thickness to the center thickness, and the longitudinal aberration of the lens is shown in FIG. 6. For a total refraction lens (the dioptre of the refractive structure accounts for 0% of the total dioptre of the lens body), the longitudinal aberration is positive aberration, and the longitudinal aberration for light at 640 nm and 480 nm is 0.8 mm. When the diffractive dioptre accounts for 5% of the total dioptre of the lens body, the diffractive aberration exceeds the refractive aberration, and the overall lens shows negative longitudinal aberration. When the diffractive dioptre accounts for more than 10% of the total dioptre of the lens body, the absolute value of the longitudinal aberration of the lens is greater than that of the total refraction lens. In other words, with the diffractive structure, the longitudinal aberration of the lens is aggravated. When the diffractive dioptre accounts for 30% of the total dioptre of the lens body, the ratio of the edge thickness to the center thickness of the lens is about 1:2, but the longitudinal aberration reaches 8 mm. When the diffractive dioptre accounts for 60% of the total dioptre of the lens body, the longitudinal aberration reaches 18 mm. Therefore, the present disclosure limits the dioptre of the diffractive structure of the lens at less than 20% of the total dioptre of the lens, so as to prevent excessive aberration caused by the diffractive structure.

Layered injection moulding is effective to solve injection moulding of the lens and improve an accuracy of the moulded surface type. With secondary injection moulding, the accuracy of the surface type of the lens is ensured. This can distribute the refractive/diffractive dioptre of the lens more reasonably to ensure the color of the low-beam cutoff line.

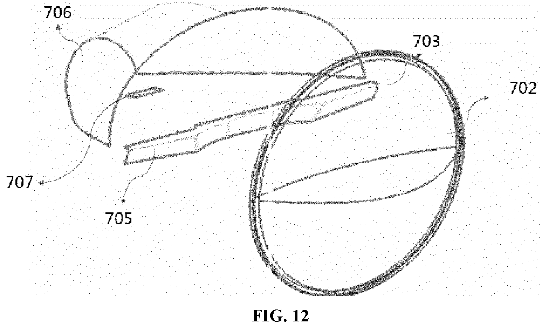

As shown in FIG. 12, a vehicular lamp includes a low-beam light source 707, a low-beam reflector 706, a low-beam baffle 705, and a lens. The lens uses the above structure. The low-beam reflector 706 covers an outer side of the low-beam light source 707. The lens is located at a light exiting side of the low-beam light source 707. The low-beam baffle 705 is located between the low-beam light source 707 and the lens. In the figure, the second refractive-diffractive surface 2 serves a using incident surface 703, while the first refractive-diffractive surface 1 serves as a using exit surface 702.

Embodiment 1

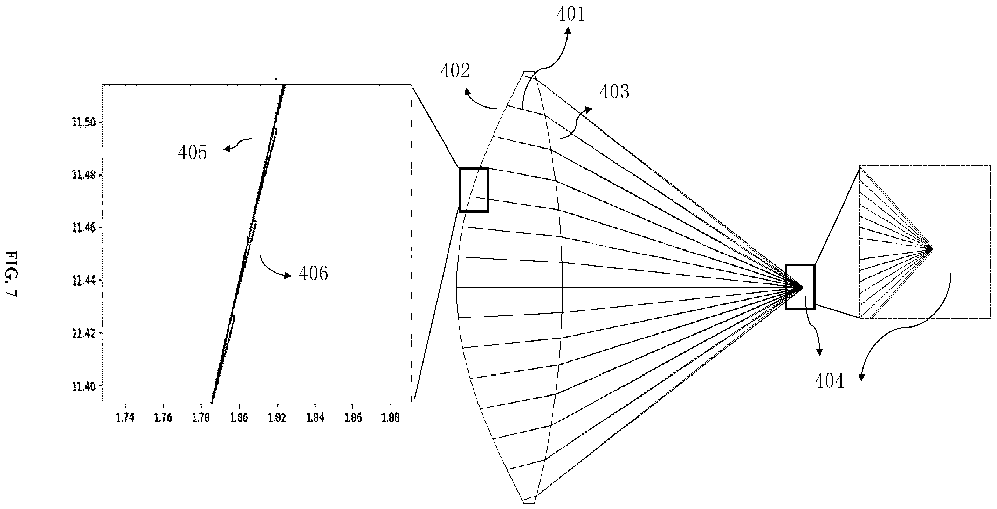

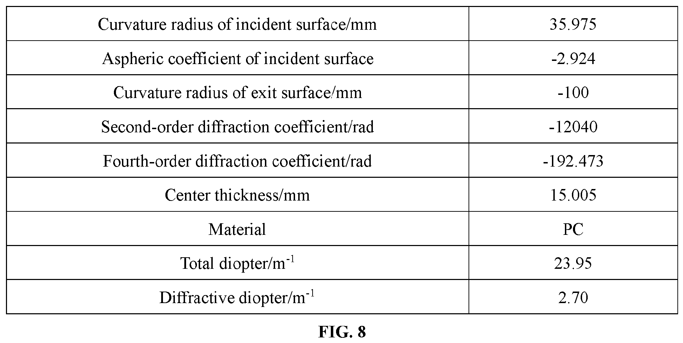

FIG. 7 is a side view of a hybrid refractive-diffractive lens in performance test. FIG. 8 illustrates a parameter table of the hybrid refractive-diffractive lens in the embodiment. When the lens is used normally, the light source is located at a same side as the second refractive-diffractive surface 2. The second refractive-diffractive surface 2 serves as the incident surface, while the first refractive-diffractive surface 1 serves as the exit surface.

However, the optical collimating device is usually detected with a reverse optical path when testing performance. The performance of the lens is evaluated by focusing parallel light. Hence, in FIG. 7, the focus 404 is located at a right side of the lens. The first refractive-diffractive surface 1 serves as a testing incident surface 402, while the second refractive-diffractive surface 2 serves as a testing exit surface 403. The testing incident surface 402 includes an envelope surface 405. The envelope surface 405 is provided with a diffractive structure 406.

In the embodiment, the lens is made of PC. The material has excellent heat resistance, with a vicat softening temperature up to 140°C. This can meet heat requirements of the vehicle headlamp, but has a high dispersion coefficient. In the embodiment, the designed wavelengths are 480 nm and 580 nm. Refractive indexes of the PC to the two wavelengths are respectively $n_1 = 1.601$ and $n_2 = 1.586$. When the lens has the dioptre of 23.06 D, if the total refraction lens is used, the difference between dioptres of the two wavelengths is about -0.55 D, which accounts for -2.3% of the total dioptre of the lens body. For the total diffraction lens, the difference between dioptres of the two wavelengths is about 4.07 $mm^{-1}$, which accounts for 20.8% of the total dioptre of the lens body. In order to eliminate dispersion of the lens, the refractive dioptre is about 9 times the diffractive dioptre, and the diffractive dioptre accounts for 10% of the total dioptre of the lens body.

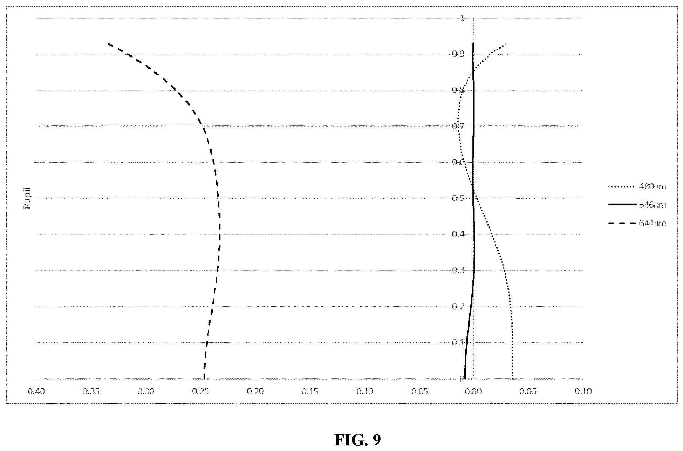

FIG. 9 is a curve of longitudinal aberration of the lens in the embodiment. As can be seen from the figure, after optimized by the hybrid refractive-diffractive method, the lens has longitudinal aberration of less than 0.3 mm to light at 488 nm to 644 nm. For the key optimized light at 480 nm and 580 nm, the longitudinal aberration is not greater than 0.05 mm.

Embodiment 2

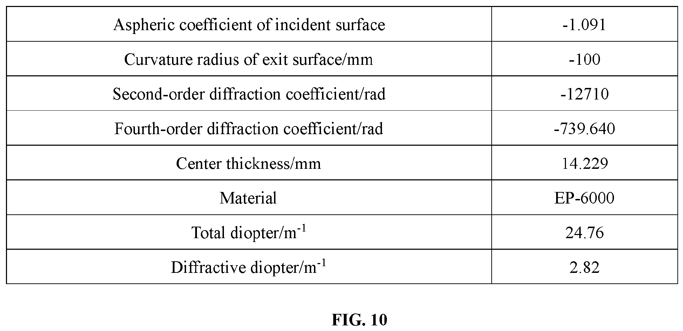

This embodiment is different from Embodiment 1. The parameter table of the lens in the embodiment is shown in FIG. 10.

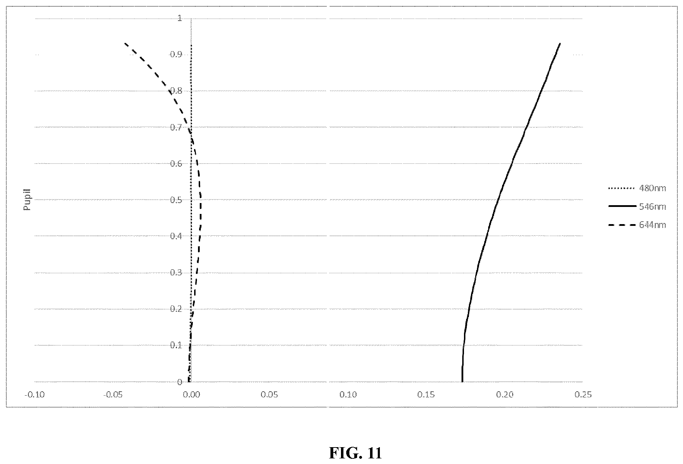

The lens in the embodiment is made of EP-6000 developed by the Mitsubishi Gas Chemical. The material has a refractive index of $N_d = 1.64$, a dispersion coefficient (Abbe number) of $V_d = 23.5$, and a glass transition temperature of 145°C. In the embodiment, the designed wavelengths are 480 nm and 644 nm. Refractive indexes of the EP-6000 to the two wavelengths are respectively $n_1 = 1.657$ and $n_2 = 1.631$. When the lens body has the total dioptre of 24.76 D, if the total refraction lens is used, the difference between dioptres of the two wavelengths is about -1.02 D, which accounts for 4% of the total dioptre of the lens. In order to eliminate dispersion of the lens, the refractive dioptre is about 8 times the diffractive dioptre, and the diffractive dioptre accounts for 11% of the total dioptre of the lens body. FIG. 11 is a curve of longitudinal aberration of the lens in Embodiment 2. After optimized by the hybrid refractive-diffractive method, the lens has longitudinal aberration of less than 0.3 mm to light at 480 nm to 644 nm. For the key optimized light at 480 nm and 644 nm, the longitudinal aberration is not greater than 0.05 mm.

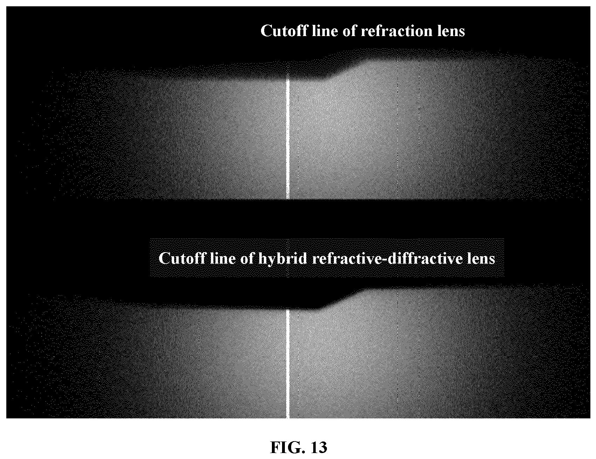

In conclusion, the present disclosure has advantages of a simple structure, reasonable design, simple operation, desirable heat resistance and low dispersion. The lens can collimate diverging light of different wavelengths from the focus, ensure sharpness of the low-beam cutoff line, and prevent aberration and blurring of the cutoff line, as shown in FIG. 13.

The above descriptions are merely specific implementations of the present disclosure. Various examples do not form limitations to substantial contents of the present disclosure. The invention is defined by the appended claims.

## Claims

1. A lens, wherein the lens collimates diverging light from a focus of the lens to form parallel light, wherein the lens is a hybrid refractive-diffractive lens, and comprises a lens body; a first refractive-diffractive surface (1) and a second refractive-diffractive surface (2) opposite to each other along an optical axis L are arranged on the lens body; the second refractive-diffractive surface (2) is located at a side close to the focus, while the first refractive-diffractive surface (1) is located at a side away from the focus; at least one of the first refractive-diffractive surface (1) and the second refractive-diffractive surface (2) is provided with a diffractive structure rotationally symmetric with respect to the optical axis L; and

an edge thickness H1 refers to a thickness of a position farthest from the optical axis L in a clear aperture of the lens body; a center thickness H2 refers to a distance between points of intersection of the first refractive-diffractive surface (1) and the second refractive-diffractive surface (2) with the optical axis L, and H1:H2=1:30 to 1:2; **characterized in that** a dioptre of the diffractive structure accounts for 5-10% of a total dioptre of the lens body.

2. The lens according to claim 1, **characterized in that** the first refractive-diffractive surface (1) is a convex surface, and the second refractive-diffractive surface (2) is a plane or a convex surface.

3. The lens according to claim 1 or 2, **characterized in that** the diffractive structure is provided on the first refractive-diffractive surface (1), and a dioptre of the diffractive structure on the first refractive-diffractive surface (1) accounts for 5-10% of the total dioptre of the lens body.

4. The lens according to claim 1 or 2, **characterized in that** the diffractive structure is provided on the second refractive-diffractive surface (2), and a dioptre of the diffractive structure on the second refractive-diffractive surface (2) accounts for 5-10% of the total dioptre of the lens body.

5. The lens according to claim 1 or 2, **characterized in that** the diffractive structures are respectively provided on the first refractive-diffractive surface (1) and the second refractive-diffractive surface (2), and a sum of dioptres of the diffractive structures on the first refractive-diffractive surface (1) and the second refractive-diffractive surface (2) accounts for 5-10% of the total dioptre of the lens body.

6. A vehicular lamp, **characterized by** comprising a low-beam light source (707), a low-beam reflector (706), a low-beam baffle (705), and a lens as defined in any one of claims 1 to 5; the low-beam reflector (706) covers an outer side of the low-beam light source (707); the lens is located at a light exiting side of the low-beam light source (707); and the low-beam baffle (705) is located between the low-beam light source (707) and the lens.

**Patentansprüche**

1. Linse, bei der die Linse divergierendes Licht von einem Brennpunkt der Linse kollimiert, um paralleles Licht zu erzeugen, wobei die Linse eine refraktiv-diffraktive Hybridlinse ist und einen Linsenkörper, eine erste refraktiv-diffraktive Oberfläche (1) und eine zweite refraktiv-diffraktive Oberfläche (2), die einander gegenüberliegend entlang einer optischen Achse L an dem Linsenkörper angeordnet sind, umfasst, wobei sich die zweite refraktiv-diffraktive Oberfläche (2) auf einer Seite nahe dem Brennpunkt befindet, während sich die erste refraktiv-diffraktive Oberfläche (1) auf einer Seite entfernt vom Brennpunkt befindet, wobei mindestens eine von der ersten refraktiv-diffraktiven Oberfläche (1) und der zweiten refraktiv-diffraktiven Oberfläche (2) mit einer diffraktiven Struktur versehen ist, die in Bezug auf die optische Achse L rotationssymmetrisch ist, und wobei

sich eine Kantendicke H1 auf die Dicke einer Position, die am weitesten von der optischen Achse L in einer freien Öffnung des Linsenkörpers entfernt ist, bezieht und sich eine Mittendicke H2 auf den Abstand zwischen den Schnittpunkten der ersten refraktiv-diffraktiven Oberfläche (1) und der zweiten refraktiv-diffraktiven Oberfläche (2) mit der optischen Achse L bezieht, wobei H1 : H2 = 1 : 30 bis 1 : 2 gilt, **dadurch gekennzeichnet, dass** eine Dioptrie der diffraktiven Struktur 5 bis 10 % der Gesamtdioptrie des Linsenkörpers beträgt.

2. Linse nach Anspruch 1, **dadurch gekennzeichnet, dass** die erste refraktiv-diffraktive Oberfläche (1) eine konvexe Oberfläche ist und die zweite refraktiv-diffraktive Oberfläche (2) eine Ebene oder eine konvexe Oberfläche ist.

3. Linse nach Anspruch 1 oder 2, **dadurch gekennzeichnet, dass** die diffraktive Struktur auf der ersten refraktiv-diffraktiven Oberfläche (1) vorgesehen ist, wobei eine Dioptrie der diffraktiven Struktur auf der ersten refraktiv-diffraktiven Oberfläche (1) 5 bis 10 % der Gesamtdioptrie des Linsenkörpers beträgt.

4. Linse nach Anspruch 1 oder 2, **dadurch gekennzeichnet, dass** die diffraktive Struktur auf der zweiten refraktiv-diffraktiven Oberfläche (2) vorgesehen ist, wobei eine Dioptrie der diffraktiven Struktur auf der zweiten refraktiv-diffraktiven Oberfläche (2) 5 bis 10 % der Gesamtdioptrie des Linsenkörpers beträgt.

**5.** Linse nach Anspruch 1 oder 2, **dadurch gekennzeichnet, dass** die diffraktiven Strukturen jeweils auf der ersten refraktiv-diffraktiven Oberfläche (1) und der zweiten refraktiv-diffraktiven Oberfläche (2) vorgesehen sind, wobei die Summe der Dioptrien der diffraktiven Strukturen auf der ersten refraktiv-diffraktiven Oberfläche (1) und der zweiten refraktiv-diffraktiven Oberfläche (2) 5 bis 10 % der Gesamtdioptrie des Linsenkörpers beträgt.

**6.** Fahrzeugleuchte, **dadurch gekennzeichnet, dass** sie umfasst eine Abblendlichtquelle (707), einen Abblendlicht-Reflektor (706), eine Abblendlicht-Blende (705) und eine Linse, wie in einem der Ansprüche 1 bis 5 definiert, wobei der Abblendlicht-Reflektor (706) eine Außenseite der Abblendlichtquelle (707) abdeckt, sich die Linse an einer Lichtaustrittsseite der Abblendlichtquelle (707) befindet und sich die Abblendlicht-Blende (705) zwischen der Abblendlichtquelle (707) und der Linse befindet.

**Revendications**

**1.** Lentille, dans laquelle la lentille effectue une collimation de lumière divergente provenant d'un foyer de la lentille pour former une lumière parallèle, dans laquelle la lentille est une lentille réfractive-diffractive hybride et comprend un corps de lentille ; une première surface réfractive-diffractive (1) et une seconde surface réfractive-diffractive (2) opposées l'une à l'autre le long d'un axe optique L sont disposées sur le corps de lentille ; la seconde surface réfractive-diffractive (2) est située sur un côté proche du foyer, tandis que la première surface réfractive-diffractive (1) est située sur un côté éloigné du foyer ; au moins une de la première surface réfractive-diffractive (1) et de la seconde surface réfractive-diffractive (2) est pourvue d'une structure diffractive symétrique de manière rotative par rapport à l'axe optique L ; et

une épaisseur de bord H1 se réfère à une épaisseur d'une position la plus éloignée de l'axe optique L dans une aperture libre du corps de lentille ; une épaisseur centrale H2 se réfère à une distance entre des points d'intersection de la première surface réfractive-diffractive (1) et de la seconde surface réfractive-diffractive (2) avec l'axe optique L, et H1 :H2 = 1 : 30 à 1 : 2 ;
**caractérisée en ce qu'**un dioptre de la structure diffractive représente 5 à 10 % d'un dioptre total du corps de lentille.

**2.** Lentille selon la revendication 1, **caractérisée en ce que** la première surface réfractive-diffractive (1) est une surface convexe, et la seconde surface réfractive-diffractive (2) est une surface plane ou convexe.

**3.** Lentille selon la revendication 1 ou 2, **caractérisée en ce que** la structure diffractive est disposée sur la première surface réfractive-diffractive (1), et une dioptrie de la structure diffractive sur la première surface réfractive-diffractive (1) représente 5 à 10 % de la dioptrie totale du corps de lentille.

**4.** Lentille selon la revendication 1 ou 2, **caractérisée en ce que** la structure diffractive est disposée sur la seconde surface réfractive-diffractive (2), et une dioptrie de la structure diffractive sur la seconde surface réfractive-diffractive (2) représente 5 à 10 % de la dioptrie totale du corps de lentille.

**5.** Lentille selon la revendication 1 ou 2, **caractérisée en ce que** les structures diffractives sont disposées sur la première surface réfractive-diffractive (1) et la seconde surface réfractive-diffractive (2) respectivement, et une somme de dioptries des structures diffractives sur la première surface réfractive-diffractive (1) et la seconde surface réfractive-diffractive (2) représente 5 à 10 % de la dioptrie totale du corps de lentille.

**6.** Projecteur de véhicule, **caractérisé en ce qu'**il comprend une source de lumière de croisement (707), un réflecteur de croisement (706), un déflecteur de croisement (705) et une lentille selon l'une quelconque des revendications 1 à 5 ; le réflecteur de croisement (706) recouvre un côté extérieur de la source de lumière de croisement (707) ; la lentille est située à un côté de sortie de lumière de la source de lumière de croisement (707) ; et le déflecteur de croisement (705) est situé entre la source de lumière de croisement (707) et la lentille.

**FIG. 1**

**FIG. 2**

**FIG. 3**

**FIG. 4**

**FIG. 5**

| Total diopter m$^{-1}$ | Diffractive diopter m$^{-1}$ | Diffractive diopter /total diopter | Center thickness mm | Ratio of edge thickness to center thickness | Longitudinal aberration mm |
|---|---|---|---|---|---|
| 20 | 0 | 0% | 18.057 | 0.083 | 0.8 |
| 20 | 1 | 5% | 17.077 | 0.088 | 0.008 |
| 20 | 2 | 10% | 16.103 | 0.093 | -0.7803 |
| 20 | 3 | 15% | 15.136 | 0.099 | -1.559 |
| 20 | 4 | 20% | 14.177 | 0.106 | -2.337 |
| 20 | 6 | 30% | 12.274 | 0.122 | -3.882 |
| 20 | 8 | 40% | 10.402 | 0.144 | -5.395 |
| 20 | 10 | 50% | 8.562 | 0.175 | -6.934 |
| 20 | 12 | 60% | 6.752 | 0.222 | -8.45 |

**FIG. 6**

**FIG. 7**

| | |
|---|---|
| Curvature radius of incident surface/mm | 35.975 |
| Aspheric coefficient of incident surface | -2.924 |
| Curvature radius of exit surface/mm | -100 |
| Second-order diffraction coefficient/rad | -12040 |
| Fourth-order diffraction coefficient/rad | -192.473 |
| Center thickness/mm | 15.005 |
| Material | PC |
| Total diopter/$m^{-1}$ | 23.95 |
| Diffractive diopter/$m^{-1}$ | 2.70 |

**FIG. 8**

**FIG. 9**

| | |
|---|---|
| Aspheric coefficient of incident surface | -1.091 |
| Curvature radius of exit surface/mm | -100 |
| Second-order diffraction coefficient/rad | -12710 |
| Fourth-order diffraction coefficient/rad | -739.640 |
| Center thickness/mm | 14.229 |
| Material | EP-6000 |
| Total diopter/m$^{-1}$ | 24.76 |
| Diffractive diopter/m$^{-1}$ | 2.82 |

**FIG. 10**

**FIG. 11**

**FIG. 12**

FIG. 13

**EP 4 350 209 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109716175 A
- WO 9900623 A
- CN 111561682 A
- JP 2001249271 A